(19) Europäisches Patentamt
European Patent Office
Office européen des brevets

(11) **EP 4 614 189 A1**

(12) **EUROPEAN PATENT APPLICATION**

(43) Date of publication:
**10.09.2025 Bulletin 2025/37**

(21) Application number: 24275017.2

(22) Date of filing: **07.03.2024**

(51) International Patent Classification (IPC):
**G01S 13/90** *(2006.01)*   **G01S 7/02** *(2006.01)*
**G01S 13/00** *(2006.01)*   *G01S 13/10* *(2006.01)*

(52) Cooperative Patent Classification (CPC):
**G01S 7/0232; G01S 7/025; G01S 7/026;**
**G01S 13/003; G01S 13/9023; G01S 13/9041;**
**G01S 13/9054; G01S 13/9058; G01S 13/9076;**
G01S 13/10

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Iceye Oy**
**02150 Espoo (FI)**

(72) Inventors:
• **THOMPSON, Alan**
**02150 Espoo (FI)**
• **LAM, Duhane**
**02150 Espoo (FI)**

(74) Representative: **Crowell & Moring U.K. LLP**
**199 Bishopsgate**
**London, EC2M 3TY (GB)**

(54) **MULTI-POLARIZED SYNTHETIC APERTURE RADAR SYSTEMS AND METHODS**

(57) Two or more synthetic aperture radar (SAR) platforms, including a first SAR platform and a second SAR platform, are used to record multi-polarized SAR data. One of the SAR platforms transmits a first SAR signal having a first polarization. A first one of the SAR platforms records a first SAR return signal having the first polarization, wherein the first SAR return signal comprises backscattered energy from the first SAR signal. A second one of the SAR platforms records a second SAR return signal having a second polarization, wherein the second SAR return signal comprises backscattered energy from the first SAR signal.

FIG. 5

## Description

### Field

The present disclosure relates to synthetic aperture radar (SAR) technology and in particular to methods and systems for producing multi-polarized SAR data.

### Background

SAR is a type of imaging technology that can be used for a variety of applications such as Earth observation, mapping, object tracking, change detection (e.g., in glaciers), natural catastrophe monitoring, and many others. SAR images are a type of image created by transmitting radar pulses, receiving the reflected and scattered return echoes, and processing the return echoes in order to form the image. This is in contrast to optical imagery, a passive technology wherein images are captured by receiving light reflected or originating from an object. SAR technology, on the other hand, is an active rather than a passive technology since it relies on transmitting radar pulses instead of relying on sunlight or other light sources. A significant advantage of SAR technology over optical imagery is that SAR technology can image at night as well as through clouds and other adverse weather conditions. However, forming an image using SAR technology is generally more complex and requires significant signal processing of the returned echoes in order to generate the image.

More particularly, SAR images are acquired from a moving transceiver, such as a transceiver that comprises part of a satellite. In a conventional imaging radar, meaning a real aperture radar without pulse compression, the cross-track resolution of an image generated by measuring reflections of a radar signal is directly proportional to the time duration of the transmitted radar pulse and the along-track resolution is inversely proportional to the along-track dimension of the antenna used to transmit and receive the radar signal. In other words, the shorter the pulse, the finer (smaller) the cross-track resolution, and the longer the antenna, the finer (smaller) the along-track resolution. This means that the length of the antenna that would be required to capture high-resolution images using conventional radar is often impractical, particularly for spaceborne use.

In contrast, SAR images are captured using a "synthetic aperture". A smaller and consequently more practical antenna is used on a moving platform to make a series of measurements of reflected radar signals, and those measurements are combined to synthesize a much larger antenna. This is achieved by exploiting the Doppler effect created by the moving SAR platform. Consequently, the resolution of a SAR image corresponds to the resolution of a conventional radar image captured using an antenna much longer than the one used to capture the SAR image.

Certain SAR applications rely on multi-polarized SAR data, in other words SAR data that is based on transmitted pulses and return echoes recorded according to different transmit and receive polarization pairs. Conventionally, such data is obtained by transmitting SAR signals from a single satellite capable of transmitting and receiving signals in multiple polarizations. In particular, the SAR satellite typically alternately transmits radar pulses having two orthogonal polarizations and records the polarization components of the return echoes of the transmitted pulses in the two orthogonal polarizations simultaneously.

### Summary

According to a first aspect of the disclosure, there is provided a method of using two or more synthetic aperture radar (SAR) platforms, including a first SAR platform and a second SAR platform, to record multi-polarized SAR data, comprising: transmitting, by one of the SAR platforms, a first SAR signal having a first polarization; recording, by a first one of the SAR platforms, a first SAR return signal having the first polarization, wherein the first SAR return signal comprises backscattered energy from the first SAR signal; and recording, by a second one of the SAR platforms, a second SAR return signal having a second polarization, wherein the second SAR return signal comprises backscattered energy from the first SAR signal.

The first SAR signal may be transmitted from the first or the second SAR platform.

Each of the first and second SAR platforms may comprise a single-polarized SAR antenna configured to transmit and receive SAR signals having only a single polarization.

The method may further comprise: transmitting, by one of the SAR platforms, a second SAR signal having the second polarization; recording, by one of the SAR platforms, a third SAR return signal having the first polarization, wherein the third SAR return signal comprises backscattered energy from the second SAR signal; and recording, by one of the SAR platforms, a fourth SAR return signal having the second polarization, wherein the fourth SAR return signal comprises backscattered energy from the second SAR signal.

The first SAR signal may be transmitted from the first SAR platform, the second SAR signal may be transmitted from the second SAR platform, the first and third SAR return signals may be recorded at the first SAR platform, and the second and fourth SAR return signals may be recorded at the second SAR platform.

The first and second SAR platforms may comprise a respective single-polarized SAR antenna configured to transmit and receive SAR signals having only a respective single polarization.

The first or second SAR return signal may be recorded in the form $S_{ii}$, $S_{ij}$, $S_{ji}$, or $S_{jj}$, wherein S is a real number comprising amplitude data, i indicates the first polarization, and j indicates the second polarization.

The first, second, third, or fourth SAR return signal may be recorded in the form $S_{ii}$, $S_{ij}$, $S_{ji}$, or $S_{jj}$, wherein S is a complex number comprising amplitude data and phase data, i indicates the first polarization, and j indicates the second polarization.

The first polarization may be a horizontal polarization and the second polarization may be a vertical polarization.

The method may further comprise: accessing topographic data relating to a target location toward which the first SAR signal was transmitted; and based on the topographic data and based on a baseline distance separating the first SAR platform from the second SAR platform, processing the first and second recorded SAR return signals to remove baseline-induced phase differences.

The phase differences may comprise one or both of monostatic phase differences and bi-static phase differences.

Transmitting the first SAR signal may comprise transmitting the first SAR signal using a SAR antenna oriented at a first squint angle relative to the target location. Transmitting the second SAR signal may comprise transmitting the second SAR signal using a SAR antenna oriented at a second squint angle relative to the target location. The first squint angle may have an opposite direction to the second squint angle.

The first SAR platform may be a SAR satellite orbiting the Earth along a first orbital path. The second SAR platform may be a SAR satellite orbiting the Earth along a second orbital path and is spaced from the first SAR platform by a baseline distance. The baseline distance may comprise an along-track component and an across-track component.

The along-track component may be less than 100 km, less than 200 km, or less than 300 km.

The first and second SAR signals may have different azimuth beamwidths, and the along-track component may be less than the smaller azimuth beamwidth. The first and second SAR signals may have the same azimuth beamwidth, and the along-track component may be less than the azimuth beamwidth.

The first and second SAR platforms may be SAR satellites orbiting the Earth. The SAR satellites may be separated by a perpendicular baseline that is less than a critical baseline.

The perpendicular baseline may be less than 100 km, less than 200 km, or less than 300 km.

A difference in viewing angles of the first and second SAR platforms may be less than 10 degrees or less than 20 degrees.

Transmitting the first SAR signal may comprise repeatedly transmitting the first SAR signal according to a pulse repetition frequency (PRF). Transmitting the second SAR signal may comprise repeatedly transmitting the second SAR signal according to the pulse repetition frequency and offset from the repeated transmissions of the first SAR signal by 1 / (2 * PRF).

The first and second SAR platforms may be SAR satellites.

The first SAR signal may be transmitted simultaneously to the second SAR signal, and the first polarization may be 90 degrees out of phase with the second polarization.

The first SAR signal may be transmitted in a first frequency band. The second SAR signal may be transmitted in a second frequency band that is non-overlapping with the first frequency band.

According to a further aspect of the disclosure, there is provided a system for recording multi-polarized synthetic aperture radar (SAR) data, comprising: a first SAR platform and a second SAR platform; and one or more computer-readable media storing computer program code configured, when executed by one or more processors, to cause the one or more processors to: transmit, by one of the first and second SAR platforms, a first SAR signal having a first polarization; record, by a first one of the first and second SAR platforms, a first SAR return signal having the first polarization, wherein the first SAR return signal comprises backscattered energy from the first SAR signal; and record, by a second one of the first and second SAR platforms, a second SAR return signal having a second polarization, wherein the second SAR return signal comprises backscattered energy from the first SAR signal.

The computer program code may be further configured, when executed by the one or more processors, to cause the one or more processors to perform any of the above-described operations. For example, the computer program code may be further configured, when executed by the one or more processors, to cause the one or more processors to: transmit, by one of the first and second SAR platforms, a second SAR signal having the second polarization; record, by one of the SAR platforms, a third SAR return signal having the first polarization, wherein the third SAR return signal comprises backscattered energy from the second SAR signal; and record, by one of the SAR platforms, a fourth SAR return signal having the second polarization, wherein the fourth SAR return signal comprises backscattered energy from the second SAR signal, wherein the first SAR signal is transmitted from the first SAR platform, the second SAR signal is transmitted from the second SAR platform, the first and third SAR return signals are recorded at the first SAR platform, and the second and fourth SAR return signals are recorded at the second SAR platform.

This summary does not necessarily describe the entire scope of all aspects. Other aspects, features, and advantages will be apparent to those of ordinary skill in the art upon review of the following description of specific embodiments.

**Drawings**

Embodiments of the disclosure will now be described in detail in conjunction with the accompanying drawings of which:

FIG. 1 is a schematic diagram of a SAR satellite orbiting the Earth, according to an embodiment of the disclosure;

FIG. 2 is a schematic diagram of a ground station relaying SAR image data from a SAR satellite to a SAR processing station, according to an embodiment of the disclosure;

FIG. 3 is a schematic diagram of a computing device configured to process and generate SAR image data, according to an embodiment of the disclosure;

FIG. 4 is a schematic diagram of a quad-polarized SAR satellite transmitting SAR signals to the Earth and receiving polarization components of the reflections of the signals;

FIG. 5 is a schematic diagram of a pair of single-polarized SAR satellites transmitting SAR signals to the Earth and receiving reflections of the signals, according to an embodiment of the disclosure;

FIG. 6 is a schematic diagram of a first single-polarized SAR satellite transmitting a SAR signal to the Earth, and the first SAR satellite and second single-polarized SAR satellite receiving reflections of the signals, according to an embodiment of the disclosure;

FIG. 7 is a schematic diagram of a pair of SAR satellites transmitting SAR signals at different respective squint angles towards the Earth, according to an embodiment of the disclosure;

FIG. 8 is a schematic diagram of a pair of SAR satellites spaced from one another by an across-track baseline and an along-track baseline, according to an embodiment of the disclosure;

FIG. 9 is a schematic diagram of a pair of SAR satellites spaced from one another by a vertical baseline, according to an embodiment of the disclosure;

FIG. 10 is a schematic diagram showing a perpendicular baseline;

FIG. 11 is a timing diagram of a method of recording quad-polarized SAR data, according to an embodiment of the disclosure;

FIG. 12 is a timing diagram of a method of recording dual-polarized SAR data, according to an embodiment of the disclosure;

FIG. 13 is a timing diagram of a method of transmitting circularly polarized SAR data and recording the backscatter, according to an embodiment of the disclosure; and

FIG. 14 is a timing diagram of a method of recording quasi-quad-polarized SAR data, according to an embodiment of the disclosure.

**Detailed Description**

The present disclosure seeks to provide novel methods and systems for producing multi-polarized SAR data. While various embodiments of the disclosure are described below, the disclosure is not limited to these embodiments, and variations of these embodiments may well fall within the scope of the disclosure which is to be limited only by the appended claims.

For many SAR applications, measuring the full polarization scattering matrix is important and provides improved target characterization than a single-polarization measurement. Conventionally, in order to measure the full polarization scattering matrix, a quad-polarized SAR satellite can alternately transmit radar pulses ("transmit signals") according to first and second polarizations that are orthogonal (e.g., an "H" polarization, for horizontal, and a "V" polarization, for vertical). Thus, a first pulse is transmitted according to polarization H, a second pulse is transmitted according to polarization V, a third pulse is transmitted according to H, etc. In other words, the satellite is continuously transmitting a train of H-pulses interleaved with a train of V-pulses. The transmit signals are transmitted according to a given polarization pulse repetition frequency (PRF), meaning that the number of pulses transmitted per second in H polarization is given by this PRF, and the number of pulses transmitted per second in V polarization is also given by this PRF. The aggregate number of pulses transmitted per second is thus twice this PRF.

The satellite's antenna records return echoes ("return signals") simultaneously on both the H and V channels in-between the transmission of each pulse. Each return signal is a backscattered signal that includes a component having the first polarization (H) as well as a component having the second polarization (V).

Because of the time it takes for a single pulse to travel to the target location, and for a backscattered portion of the pulse to return to the satellite, it is typical for many more pulses to have been transmitted in the intervening time. Therefore, in reality, the return signals are return echoes that are backscattered from a pulse that was transmitted some time in the past, and not necessarily from the earliest-preceding transmitted pulse in the pulse train.

Throughout this disclosure, the term "backscattered" should be interpreted broadly to include both scattered energy that hits an object and is scattered directly back to the transmitter, and also energy that is scattered back to a receiver not necessarily co-located with the transmitter. Thus, "backscatter" will be used to include the bi-static case, noting that, in the bi-static cases of interest, the assumed baselines (transmitter-to-receiver separation) are small enough that the direction of scattering is nearly the same back to the transmitter and back to the receiver.

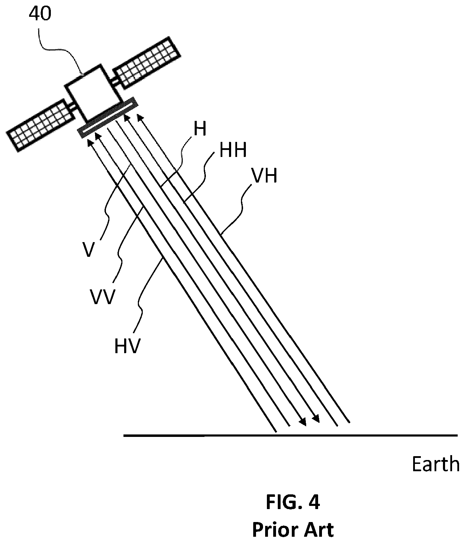

A single quad-polarized (quad-pol) satellite is able to transmit in two polarizations and record all four different combinations of transmitted and returned polarizations: HH, HV, VH, and VV. These are usually expressed in the form of a complex scattering matrix, $\begin{pmatrix} S_{ii} & S_{ij} \\ S_{ji} & S_{jj} \end{pmatrix}$. This scattering matrix consists of four complex numbers giving the amplitude and phase of the radar backscatter for all four combinations of "transmit" and "receive" polarizations, wherein the first letter denotes the transmit polarization and the second letter denotes the receive polarization. An example of this prior art approach is shown in FIG. 4, wherein satellite 40 is seen transmitting transmit signals according to the H and V polarizations, and recording return echoes that include both an H-polarized component and a V-polarized component. It is important to note that targets can scatter and reflect return energy in multiple polarizations in response to a pulse with only a single polarization, and the differences in how different materials do this can provide important information in certain SAR applications. As such, VH denotes receiving H-polarized echoes backscattered from a V-polarized pulse, and HV denotes receiving VH-polarized echoes backscattered from an H-polarized pulse. These are known as the cross-polarization components of the return echoes.

One problem with this approach is that a quad-pol satellite is significantly more complex and more expensive than a single-polarization (single-pol) satellite. Also, on a single quad-pol satellite, the power being used to operate the antenna must be split between transmitting pulses in both the H and V polarizations. Since less power is being used transmitting the pulses in each polarization, the signal-to-noise ratio of the recorded data for each channel decreases, even though the total overall power remains the same, compared to single-polarization operation with the same satellite.

The present disclosure describes an alternative method of recording multi-polarized SAR data using multiple satellites. In particular, according to some embodiments of the disclosure, there is described a method of using two SAR satellites, including a first SAR satellite and a second SAR satellite, to record multi-polarized SAR data. The method includes transmitting, by one of the SAR satellites and toward a target location, a first SAR signal having a first polarization. The method further includes recording, by a first one of the SAR satellites, a first SAR return signal having the first polarization, wherein the first SAR return signal comprises backscattered energy from the first SAR signal. The method further includes recording, by a second one of the SAR satellites, a second SAR return signal having a second polarization, wherein the second SAR return signal comprises energy backscattered from the first SAR signal but in the second polarization.

According to such embodiments, a first single-polarized SAR satellite may transmit a SAR signal according to a first polarization, and both the first single-polarized SAR satellite and a second single-polarized SAR satellite may record the backscattered return signals. In particular, one of the satellites is configured to receive return signals according to only the first polarization, and the other satellite is configured to receive return signals according to only a second polarization. According to such embodiments, only one of the SAR satellites needs to perform a transmitting function and the other satellite operates only as a receiver. This mode is known as dual-pol mode.

In the above context, a single-polarized SAR satellite is understood to be a SAR satellite having a single-polarized SAR antenna that is configured to transmit and/or receive SAR signals according to only a single polarization, whereas a multi-polarized SAR satellite is understood to be a SAR satellite that is configured to transmit and/or receive SAR signals according to two different polarizations.

According to some embodiments, the method may further comprise transmitting, by one of the SAR satellites and toward the target location, a second SAR signal having the second polarization. The method further includes recording, by one of the SAR satellites, a third SAR return signal having the first polarization, wherein the third SAR return signal comprises backscattered energy from the second SAR signal. The method further includes recording, by one of the SAR satellites, a fourth SAR return signal having the second polarization, wherein the fourth SAR return signal comprises backscattered energy from the second SAR signal.

Therefore, according to such embodiments, each of the first and second SAR satellites may comprise a single-polarized SAR antenna configured to both transmit and record SAR signals according to only a single polarization. Therefore, this proposed approach may allow for the measurement of the full quad-polarization scattering matrix using two different single-polarized radars on two satellites, rather than on one quad-pol satellite.

Such a method may have various advantages. For example, a quad-polarized SAR satellite is generally more complex and more expensive to design and manufacture than a single-polarized SAR satellite because the antennas on the quad-pol satellite would need to be designed to be able to transmit and receive SAR signals according to two different polarizations. Therefore, in certain cases, such as when a single-pol design is available and a multi-pol design is not, it may be more economical to use a pair of single-polarized SAR satellites in order to obtain quad-polarized SAR data. For example, it may be more economical to use a pair of single-polarized SAR satellites than to replace the antenna of a single-polarized SAR satellite with a SAR antenna or antennas capable of transmitting and receiving in two polarizations. A pair of single-pol SAR satellites may also be simpler than a single quad-pol SAR satellite.

It should be noted that a pair of single-pol satellites as described above could operate in either the dual-pol or quad-pol modes described in the examples above. In a dual-pol mode, the pair of single-pol satellites will not be able to capture the full quad-polarization scattering matrix (since SAR signals according to only one of the two polarizations are being transmitted), but the satellite configuration may benefit from an improved swath width while obtaining dual-pol data. This is because the energy being transmitted does not need to be divided between two different polarizations, and as such a wider width on the ground can be covered. This mode may be particularly beneficial in applications where a high swath-width is more important than obtaining quad-pol SAR data. In other applications, obtaining quad-pol SAR data may be more important, or necessary, and as such the pair of single-pol satellites could be operated to obtain quad-pol data.

Detailed embodiments of the disclosure will now be described in connection with the drawings.

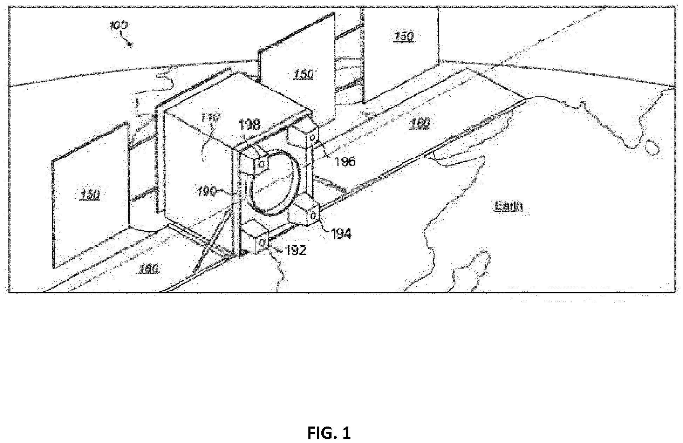

FIG. 1 depicts an exemplary satellite 100 in orbit around the Earth of the kind which may be used in the implementation of methods described herein. Satellite 100 comprises a body 110 which may be referred to in the art as a "bus" since it may house or support so-called bus components of a satellite. Body 110 may additionally house one or more batteries. Body 110 may be partially enclosed, for example to house and protect components. A housing may provide surfaces on which components may be mounted. In the example of FIG. 1, a solar panel is mounted on one rectangular surface of body 110 and additional solar panels 150 may be attached to this solar panel by struts.

Satellite 100 comprises a radar antenna array 160 in the form of a generally planar structure extending from bus 110 in two opposing directions to provide two "wings". The structure comprising wings 160 is shown to be mounted on or adjacent to a rectangular surface of body 110. Body 110 and wings 160 of satellite 100 may be collectively referred to as the spacecraft frame. Antenna array 160 together with associated amplifiers and a power distribution system (not shown) collectively form an image acquisition apparatus of satellite 100. In an example, antenna array 160 may be an active phased-array antenna which allows for electronic beam steering. However, the methods described herein can also be used with other types of phased-arrays antennas, such as passive phased-array antennas and phased-array antennas with waveguides and phase shifters, as well as other types of SAR satellites, such as SAR satellites using a reflector antenna (single and multiple feed) and a waveguide antenna.

As described above, in a synthetic aperture radar system (SAR system), antenna array 160 is operated to transmit radar signals to the Earth and receive returning echoes or reflections of these signals. By recording the echoes, an image of the Earth's surface can be constructed from the data, including the length of time taken for the echo to return (indicating location), the amplitude of the radar return, and the phase information that is included within the radar return. Further location information is obtained from the frequency of the radar return which is shifted due to the Doppler effect as a result of the motion of satellite 100 relative to the Earth.

Satellite 100 is provided with a propulsion system 190 for manoeuvring satellite 100 with a generated thrust. Propulsion system 190 comprises a plurality of thrusters 192, 194, 196, 198 that produce thrust for manoeuvring satellite 100 when required, for example to position satellite 100 onto a different orbital track. Thrusters 192, 194, 196, 198 shown in FIG. 1 are positioned at the corners of one side of body 110 and may be equally spaced apart. However, in other embodiments, propulsion system 190 may have a different configuration.

In some embodiments, satellite 100 may be orbiting Earth in a low-earth orbit. A low-earth orbit may have an altitude between 160 kilometres and 1,000 kilometres above the surface of the Earth. Examples of Earth-observation satellites operating SAR payloads can accordingly have orbits with an altitude of between 450 kilometres and 850 kilometres above the Earth. In one particular example, a SAR satellite may have an orbit that is approximately 550 kilometres above the Earth's surface. At an orbit of 550 kilometres above the Earth, the satellite may be travelling with a speed of approximately 7.5 km/s measured in an Earth-centred inertial reference frame. Most satellites in such an orbit will travel at a speed that is in the range of 7-8 kilometres per second as measured in an Earth-centred inertial reference frame.

As a SAR satellite operates its SAR payload and receives radar returns, it accumulates raw "SAR data". Raw SAR data generally comprises the recorded, digitized, and down-converted radar signals as they are received by the SAR sensor. As described above, these signals are typically represented as complex-valued numbers, where each complex value consists of two components: the in-phase (I) component and the quadrature (Q) component. SAR data is typically received and processed in I and Q channels, and therefore it is traditional to represent SAR data in this form. These components correspond to the real and imaginary parts of a complex number and contain the information necessary to derive the amplitude and phase of the received radar signal, as also described above. In order to construct an image corresponding to the SAR data, the data must be processed. While in theory the data may be processed by any suitable computer processor, even a computer processor onboard the satellite, it is more typical for the raw SAR data to be first transmitted or downlinked from the SAR satellite to a ground station on the Earth's surface. The data can be downlinked whenever the SAR satellite has line of sight to the ground station. The downlinked SAR data is then typically relayed to a SAR processing station which performs the necessary processing of the SAR data, as now described in further detail.

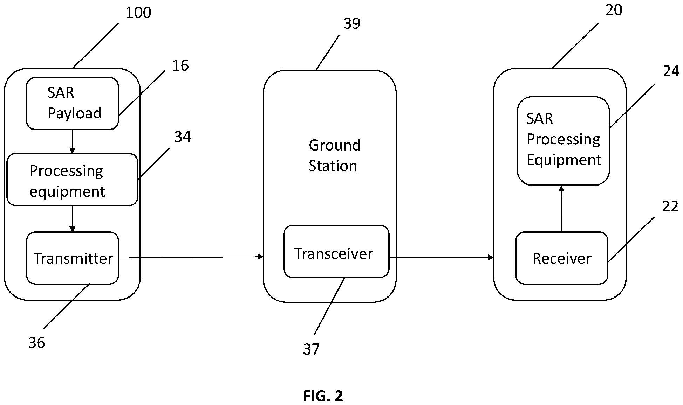

In particular, referring to FIG. 2, there is shown a schematic diagram of hardware components onboard satellite 100 being used to allow satellite 100 to communicate with a SAR processing station 20 on the Earth's surface. SAR processing station 20 houses the computer hardware components that are used to process the SAR data and generate the SAR images, as described in further detail below. Typically, satellite 100 will first downlink the SAR data to a ground station 39, and ground station 39 will relay (using a wired or wireless communication link) the downlinked SAR data to SAR processing station 20. However, it is possible, according to some embodiments, for ground station 39 to process the SAR data, in which case ground station 39 effectively performs the function of SAR processing station 20. SAR processing station 20 can be an office, an operations station, or any other location comprising any computer device (such as a laptop) capable of processing the SAR data. The SAR processing may also be carried out using cloud computing, for example through the use of multiple processors operating in parallel, in which case SAR processing station 20 is the location at which the SAR data is received and passed to the cloud.

Generally, satellite 100 includes a SAR payload 16 (e.g., comprising antenna array 160), satellite processing equipment 34, and a transmitter 36. Meanwhile, SAR processing station 20 includes a receiver 22 and SAR Processing Equipment 24. Satellite processing equipment 34 and SAR Processing Equipment 24 comprise suitable computer processors, comprising circuitry, and computer-readable media configured to perform various functions as described herein. Ground station 39 includes a transceiver 37 (or a separate transmitter and receiver) for relaying the SAR data from satellite 100 to SAR processing station 20. For example, relaying the SAR data from ground station 39 to SAR processing station 20 can be performed through a wired or wireless terrestrial network. According to some embodiments, if satellite 100 is not in direct communication with ground station 39, the SAR data can be relayed to ground station 39 via another satellite or an aircraft.

During operation, data captured by SAR payload 16 is passed to satellite processing equipment 34 for pre-processing (which may include, for example, basic compression/encoding/packaging). Following pre-processing, the pre-processed data is passed to transmitter 36 which transmits or otherwise downlinks the data to transceiver 37 of ground station 39. Transceiver 37 of ground station 39 then relays the SAR data to receiver 22 of SAR processing station 20. Receiver 22 passes the data to SAR Processing Equipment 24 which processes the data as described in more detail below.

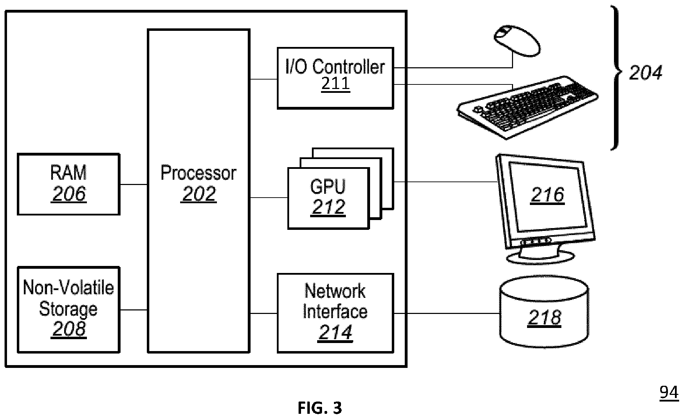

Turning to FIG. 3, there is shown an example of hardware components in SAR Processing Equipment 24. In particular, a computer system 200 comprises a processor 202 that controls computer system's 200 overall operation. Processor 202 is communicatively coupled to and controls several subsystems. These subsystems comprise an input/output ("I/O") controller 211, which is communicatively coupled to user input devices 204. User input devices 204 may comprise, for example, any one or more of a keyboard, mouse, touch screen, and microphone. The subsystems further comprise random access memory ("RAM") 206 which stores computer program code for execution at runtime by processor 202; non-volatile storage 208 which stores the computer program code executed by RAM 206 at runtime; graphical processing units ("GPU") 212 which control a display 216; and a network interface 214 which facilitates network communications with a database 218. Non-volatile storage 208 has stored on it computer program code that is loaded into RAM 206 at runtime and that is executable by processor 202. When the computer program code is executed by processor 202, processor 202 causes computer system 200 to implement a method of generating SAR image data, such as described herein. Additionally, or alternatively, multiple of computer systems 200 may be networked together and collectively perform that method using distributed computing.

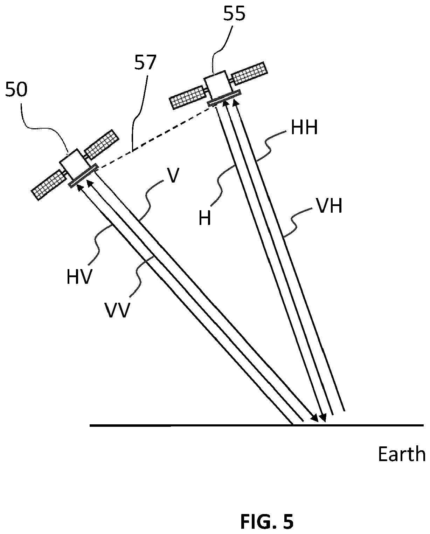

Turning now to FIG. 5, there is shown a schematic diagram of a satellite configuration or "formation" configured to generate quad-polarized SAR data, according to an embodiment of the disclosure.

As can be seen in FIG. 5, a pair of SAR satellites 50 and 55 are orbiting the Earth. Each satellite 50, 55 is single-polarized, meaning as described above that each satellite 50, 55 comprises a SAR antenna that is configured to transmit and receive signals according to a single polarization. In the example shown in FIG. 5, satellite 50 is configured to transmit and receive H-polarized signals, and satellite 55 is configured to transmit and receive V-polarized signals, although other polarizations may be used. During their operation, satellites 50 and 55 fly in formation and use combined bi-static and monostatic operations, as described below. Generally, a monostatic satellite is one in which the transmitter and receiver are co-located (i.e., are located on the same satellite), whereas in a bi-static operation the transmitter and receiver are located on different satellites.

Satellite 50 and satellite 55 operate with the same pulse repetition frequency (PRF), but with a one-half pulse-repetition interval (PRI) offset. Each satellite's individual PRF is selected to adequately sample the Doppler spectrum, and therefore the PRF may be in the same range of values as for a single-polarized strip map or spotlight operation. As a result, the aggregate PRF from both satellites is twice that of the PRF that would be used in the conventional case of a single-polarized satellite being used to record single-polarized SAR data. Therefore, this results in narrower receive windows, and the swath width is approximately half that of a single-polarized strip map or spotlight operation with the same PRF. Synchronization of the PRFs, as well as synchronization of the pulses themselves, may be achieved using any suitable means. Two example means of synchronization include exchanging timing signals between the satellites to synchronize clocks, or using very stable atomic clocks for which synchronization may not be necessary.

Each satellite 50, 55 records return signals corresponding to all the transmitted pulses at the aggregate PRF. Therefore, satellite 50 records both the co-polarizations VV (i.e., V pulses transmitted by satellite 50 and echoes thereof recorded by satellite 50) and the cross-polarization HV (i.e., H pulses transmitted by satellite 55 and echoes thereof recorded by satellite 50). Meanwhile, satellite 55 records both the co-polarizations HH (i.e., H pulses transmitted by satellite 55 and echoes thereof recorded by satellite 55) and the cross-polarization VH (i.e., V pulses transmitted by satellite 50 and echoes thereof recorded by satellite 55). This provides all polarization combinations, namely HH, HV, VH, and VV, in a fashion similar to a conventional quad-polarized satellite.

Because of the bi-static operation of SAR satellites 50 and 55, the transmit and return signals will lack coherence to some degree, as a function of the baseline distance 57 separating the two satellites. However, if phase information is desired in addition to amplitude information, it is important that satellites 50 and 55 be phase coherent. Therefore, signal processing may be required in order to compensate for baseline-induced channel-to-channel phase differences. In order to eliminate phase differences and restore phase coherence, performance can be enhanced by using a digital elevation model (or other topographic data) to negate the effect of topographic artefacts in the baseline-induced phase differences. For example, topographic data relating to the target location being imaged may be accessed and, based on the topographic data and based on baseline distance 57 separating satellite 50 from satellite 55, the return signals may be processed to remove the combined baseline and terrain induced phase differences.

The above-described method of generating quad-polarized SAR data can be used in any of the following operating modes: strip map, fixed spotlight, and sliding spotlight. The spotlight and fixed spotlight modes could be implemented using electronic steering, mechanical steering, or a combination of the two. The method can additionally be used in ScanSAR (Scanning Synthetic Aperture Radar) mode or TOPS (Terrain Observation with Progressive Scans) mode, with the additional constraint that burst synchronization is required between the two satellites.

In the description above, satellites 50 and 55 are single-polarized satellites, each transmitting and receiving in either V or H polarizations. However, it should be noted that in an alternative embodiment one or both satellites 50 and 55 do not necessarily have to be single-polarized satellites. For example, either satellite 50 or satellite 55, or both satellites 50 and 55, could themselves be a multi-polarization satellites operating in single-polarization mode such that they only transmit and receive in one polarization. If one of the satellites is already a quad-pol satellite then, while it may seem redundant to use the quad-pol satellite in a bi-static formation with another quad-pol satellite or with another single-pol satellite, there may be some advantages to doing so, for example to bring more transmit power to bear on a particular target area in order to improve the signal-to-noise ratio of the imaging.

In another alternative, satellites 50 and 55 do not necessarily have to transmit and receive in the same polarization. For example, satellite 50 could be a satellite that transmits in V and receives in H, and satellite 55 could be a satellite that transmits in H and receives in V. In this case, satellite 50 would record the VH component from backscatters resulting from the V pulses that it sends out, and the HH components from backscatters resulting from the H pulses that satellite 55 sends out, and vice versa. Although examples using two satellites to obtain multi-polarized SAR data are described, additional examples of using formations comprising more than two satellites to obtain multi-polarized SAR data are also possible.

While the embodiment of FIG. 5 illustrates two single-polarized SAR satellites transmitting respective transmit signals, it is also possible, according to some embodiments of the disclosure, for only a single one of the single-polarized SAR satellites to transmit SAR signals, and for both SAR satellites to act as receivers. According to this embodiment, one of the SAR satellites only needs to receive signals and does not need to transmit.

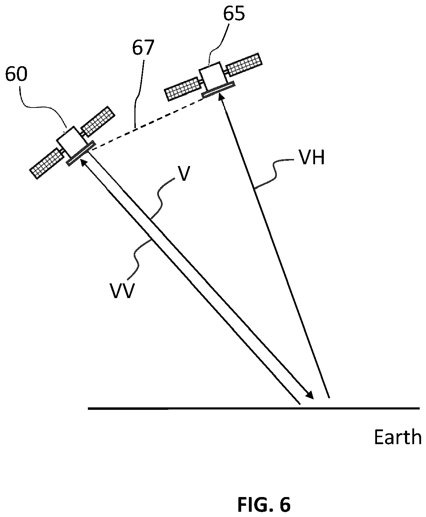

Turning to FIG. 6, there is shown a schematic diagram of a bi-static SAR satellite formation according to a further embodiment of the disclosure. According to this embodiment, a pair of SAR satellites 60 and 65 are orbiting the Earth. Satellite 60 is single-polarized, meaning that satellite 60 comprises a SAR antenna that is configured to transmit and receive signals according to a single polarization. Satellite 65 is also single-polarized, but, unlike satellite 60, is configured not to transmit and instead only to receive signals.

Satellite 60 records the co-polarization VV (i.e., V pulses transmitted by satellite 60 and V echoes thereof recorded by satellite 60). Meanwhile, satellite 65 records the cross-polarization VH (i.e., V pulses transmitted by satellite 60 and H echoes thereof recorded by satellite 65). This provides the polarization combinations VV and VH. While this does not allow for the full quad-polarization scattering matrix to be obtained, it may be suitable for some applications. This satellite configuration does provide the advantage of increased swath width, as described above (i.e., since satellite 60 is transmitting half as frequently as its counterpart satellite 50 in FIG. 5, and therefore satellites 60 and 65 can record returns signals for approximately twice as long as their respective counterpart satellites 50 and 55 in FIG. 5).

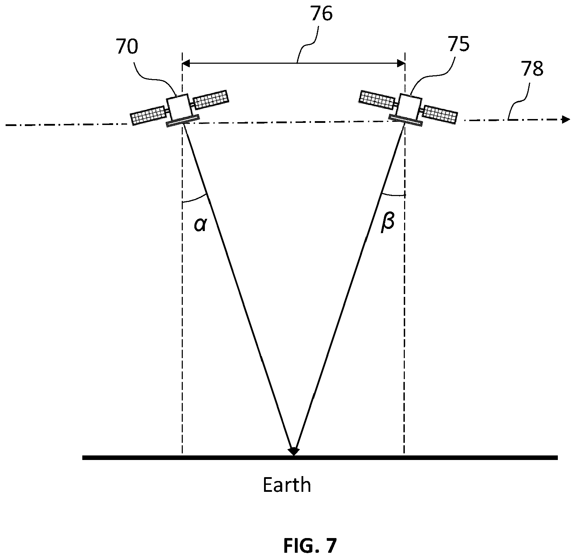

Generally, in both the embodiments of FIGS. 5 and 6, the satellites are operated in relatively close formation so as to permit bi-static operation to record the cross-polarization returns, and simultaneous monostatic operation to record the co-polarization returns. According to some embodiments, the satellites may be flown along a common orbital path, for example as shown schematically in FIG. 7. As can be seen in FIG. 7, a first satellite 70 and a second satellite 75 are orbiting the Earth along a common orbital path 78. According to this embodiment, the orientation of the SAR antenna of satellite 70 is squinted at a certain squint angle ($\alpha$) in the fore direction, whereas the orientation of the SAR antenna of satellite 75 is squinted at a certain squint angle ($\beta$) in the aft direction, so that both satellites 70 and 75 are illuminating and receiving radar returns from the same target location at the same time.

Squinting the transmission directions may be achieved by rotating the satellites as shown (e.g., mechanical steering) or may be achieved by using electronic beam steering if the squint angles involved are sufficiently small. Squinting is particularly useful when the squint angles are larger (e.g., when collecting amplitude-only data) so that the target area can be illuminated by both satellites at the same time. It can also be helpful for small squints (e.g., when the two satellites are relatively close together) to improve radiometry and signal level. Note that satellites 70 and 75 are side-looking, and therefore the transmission directions shown in FIG. 7 are also extending into or out of the page.

Satellite 70 is separated from satellite 75 by an along-track baseline 76. There are a number of considerations in determining along-track baseline 76. A larger separation between satellites 70 and 75 is desirable to reduce the risk of collision and to reduce the preciseness with which each satellite needs to be controlled. However, they also should not be too far apart due to imaging considerations.

In an example application in which only multi-polarized amplitude information is desired, the constraints are mainly due to the fact that, when performing SAR imaging, target objects and materials (e.g., fields or oceans) can appear different depending on viewing angle. As such, if the difference in the viewing angle between satellites 70 and 75 is too great, then the variation in the recorded amplitudes can increase. In an example, it may be desirable to keep the difference in viewing angles (e.g., $\alpha + \beta$ in FIG. 7) to less than 10 degrees, or to less than 20 degrees, depending on the precision required and the type of terrain and vegetation being imaged. Based on this, an along-track baseline of 100 km or more is possible.

In an example application in which phase information is desired, along-track baseline 76 should less than the azimuth beamwidth of each satellite 70, 75, which is a tighter constraint. In the event that satellites 70, 75 have different azimuth beamwidths, then baseline 76 is less than the smaller of the two. In an example, the beamwidth for a 3 metre long (L) SAR antenna with a 3 cm wavelength $\lambda$ can be calculated as follows:

$$beamwidth = \frac{\lambda}{L} = \frac{3\,cm}{3\,m} = 0.01\,radians$$

This is equal to about 0.57 degrees which, with an example slant distance R, from the satellite to the ground, of 800 km translates into a beamwidth on the ground of approximately 8 km.

This ensures that there is overlap between the mono-static Doppler bandwidth from one satellite, and the bi-static Doppler bandwidth for the satellite-to-satellite transmission path. This Doppler overlap may allow for coherence between the mono-static and bi-static data channels and allows for the inter-polarimetric phase to be meaningful.

According to some embodiments, the satellites may be flown with a separation in the cross-track and vertical distances, either instead of or in addition to an along-track separation. Practically speaking, separation in both the vertical and the cross-track directions can help to reduce the risk of a collision, especially if the along-track separation is small in order to allow for use of phase information.

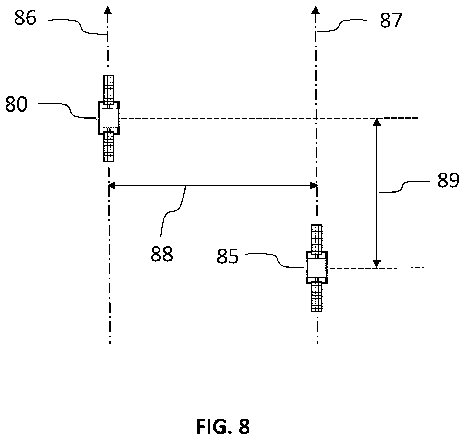

FIG. 8 shows schematically an example of a top-down view of a pair of satellites 80, 85 orbiting the Earth along different respective orbital paths 86, 87 and spaced from one another by an across-track distance 88 and an along-track distance 89.

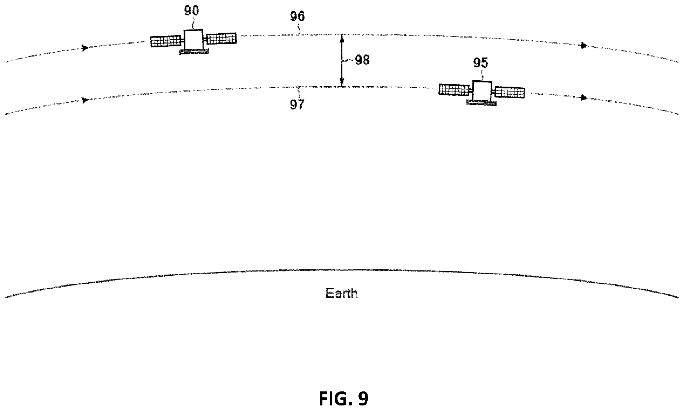

FIG. 9 shows schematically an example of a side-on view of a pair of satellites 90, 95 orbiting the Earth along different respective orbital paths 96, 97 that are spaced apart from one another by a vertical distance 98.

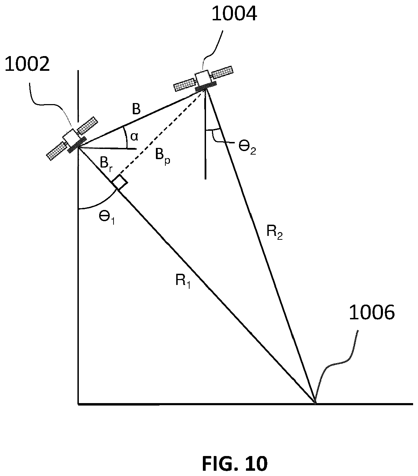

FIG. 10 is a schematic representation of a first satellite 1002 and a second satellite 1004 flying in a bi-static formation with both vertical and horizontal separation while imaging a target 1006 on the surface of the Earth. In this example, both of the satellites are travelling directly into the page or out of the page, and as such their positions are projected onto a viewing plane perpendicular to the direction of travel of the satellites and containing target 1006. In this viewing plane, the distance between the satellites is given by the baseline B. The baseline B has a component $B_p$, known as the perpendicular baseline, which is perpendicular to the imaging plane, and a component $B_r$, known as the slant range baseline, which is parallel to a line $R_1$ extending between target 1006 and satellite 1002. This gives:

$$B_p = B \cos (\Theta - \alpha)$$

and

$$B_r = B \sin (\Theta - \alpha).$$

Note that $\Theta_1$ and $\Theta_2$ in FIG. 10 are essentially equal, given that $B$ is small compared to $R_1$ and $R_2$, and therefore we use $\Theta$ in the equations above as a good approximation for either $\Theta_1$ or $\Theta_2$.

In some embodiments, there may be a further separation between the satellites in the azimuth direction that does not appear in FIG. 10 but can be helpful for increasing the separation between the satellites.

In the embodiments described above, it may be advantageous to keep the satellites comprised in the bi-static formation relatively close together but not so close as to risk a collision. However, although more separation helps with minimizing the risk of a collision, too much separation between the satellites is not desirable because, as the perpendicular baseline increases, the degree of coherence between the data transmitted along path $R_1$ vs. data transmitted along path $R_1$ and $R_2$, or along $R_2$ alone, decreases. Lack of phase coherence is not a problem if only multi-polarized amplitude information is required for a given application, but for applications where amplitude and phase information is desired it is helpful to know approximately what the maximum distance between the satellites should be, in order to maintain at least some degree of phase coherence.

According to some embodiments, the perpendicular baseline between satellites 1002 and 1004 as shown in FIG. 10 should be kept below a critical baseline as a condition for some degree of phase coherence between the respective transmission and reception paths of the satellites.

When SAR imaging is performed, the echo from the pulse incident on the ground provides a convolution of the pulse with the ground backscatter as a function of ground range. This convolution corresponds to a bandpass filter of the ground backscatter. As the perpendicular baseline increases, this bandpass filter moves. Coherence requires that the passbands of the two filters overlap. The critical baseline is defined as the perpendicular baseline length where the two passbands have exactly no overlap.

The critical baseline $B_c$, in the bi-static case, is given by:

$$B_c = \frac{2\lambda R \tan(\theta - \eta) B_w}{c}$$

R is the slant range, $\lambda$ is wavelength, $\Theta$ is the incidence angle, $B_w$ is the pulse bandwidth of the system, c is the speed of light, and $\eta$ is the slope of the terrain in the target area. For relatively flat ground, $\eta$ can be approximated as zero. If the terrain is tilted towards the SAR satellite then $\eta$ is positive, and if the terrain is slanted away from the satellite then $\eta$ is negative. For R, either $R_1$ or $R_2$ in FIG. 10 can be used since, for a satellite in space and a relatively small baseline B, $R_1$ and $R_2$ will be very close. Similarly, for $\Theta$, either $\Theta_1$ or $\Theta_2$ in FIG. 10 can be used since, in reality, for an application in space, the difference between them will be negligible.

In an example, a pair of X-band SAR satellites operating in a bi-static formation in low-Earth orbit is approximately a distance of R = 800 km away from the target on the ground. For an X-band radar operating at 9.8 GHz, the wavelength A is 0.03 m. The incidence angle $\Theta$ is approximately 45 degrees, and a terrain slope $\eta = 0$ is assumed. The bandwidth $B_w$ of the system is 600 MHz. Since the speed of light c is $3 \times 10^8$ m/s, the critical baseline $B_c$ can be calculated as:

$$B_c = \frac{(2)(0.03)(800 \; x \; 10^3)\,(\tan(45°))\,(600 \; x \; 10^6)}{(3 \; x \; 10^8)} \cong 96 \; km$$

Therefore, in example applications where multi-polarized phase information is desired, it is important to maintain at least a degree of phase coherence between the respective transmission and reception paths of the bi-static formulation, and the perpendicular baseline $B_p$ between the two satellites should be less than approximately 96 km. In terms of satellites flying in space at approximately 7.5 km/s, this is still quite close, and in practice it can be difficult to fly with constant across-track or vertical separation due to orbit mechanics.

In addition, the distance between the satellites in the azimuth direction should also be considered.

FIG. 10 and the calculation of the critical baseline assumes the two satellites are operating in the same imaging plane. In practice, as previously discussed, it may also be desirable to operate the satellites with some degree of separation in the azimuth direction to avoid collisions. However, separation in the azimuth direction can reduce the amount of phase coherence between the respective transmit and receive signals of the two satellites, and so should be kept reasonably small.

A larger baseline in the along-track direction will reduce the amount of phase coherence at a given perpendicular baseline $B_p$ in the imaging plane, so in practice it may be preferable to keep the $B_p$ well below the critical baseline. Similarly, a larger perpendicular baseline $B_p$ reduces the phase coherence for a given along-track baseline, so in this case it may be desirable to maintain a higher degree of overlap between the mono-static Doppler bandwidth from one satellite to the other. Without common band filtering, the coherence decreases from 100% to zero as both baselines increase, reaching zero when both are at their limit. With common band filtering, full coherence can be maintained but resolution is lost until the limit is reached, at which point there is no resolution. For this reason, it makes sense for applications requiring phase information to keep the perpendicular baseline well beneath the critical baseline, while at the same time making sure that the along-track baseline is significantly less than the azimuth bandwidth of each satellite.

In example applications where only amplitude information is desired, it is not as important to keep the baseline below the critical baseline, and larger perpendicular baselines $B_p$ and along-track separations can be possible. For example, distances of 100 km or more are possible for both the along-track and the perpendicular baselines. As such, it may be desirable to keep the distances in both directions below about 200 km, or below about 300 km. However, with increasing distances above several hundred kilometers or more (e.g., greater than 300 km), the difference in viewing angle between the two satellites can introduce potential variations in the amplitude readings. For example, with a difference of viewing angles greater than 10 degrees, or greater than 20 degrees, errors can start to be more significant based on the differences in the backscatter of objects and materials at different viewing angles.

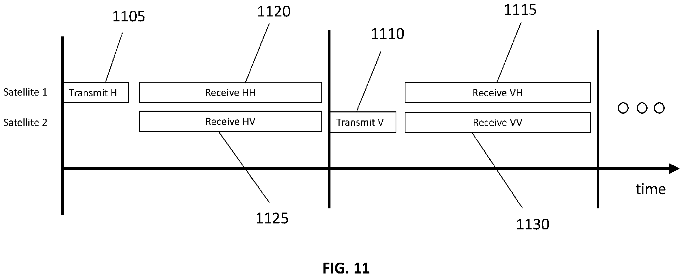

Turning now to FIG. 11, there is shown a timing diagram of an example method of recording quad-polarized SAR data, according to an embodiment of the disclosure.

At block 1105, a first SAR signal according to a first polarization (H) is transmitted from a first SAR satellite.

At block 1120, the first SAR satellite records an HH-polarized return signal.

At block 1125, a second SAR satellite records an HV-polarized return signal.

At block 1110, a second SAR signal according to a second polarization (V) is transmitted from the second SAR satellite.

At block 1115, the first SAR satellite records a VH-polarized return signal.

At block 1130, the second SAR satellite records a VV-polarized return signal.

In an example, the transmit time of blocks 1105 and 1110 is approximately 10 micro-seconds, and the receive time of blocks 1120, 1125, 1115, and 1130 is approximately 90 micro-seconds, meaning that, in the system as a whole, approximately 10% of time is spent transmitting and 90% of time is spent receiving.

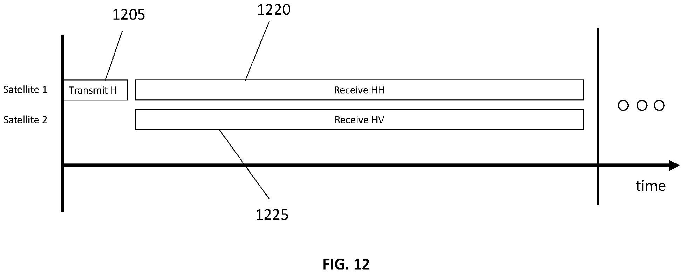

Turning now to FIG. 12, there is shown a timing diagram of an example method for recording dual-polarized SAR data, according to an embodiment of the disclosure.

At block 1205, a first SAR signal according to a first polarization (H) is transmitted from a first SAR satellite.

At block 1220, the first SAR satellite records an HH-polarized return signal.

At block 1225, a second SAR satellite records an HV-polarized return signal.

At this point, and contrary to the quad-pol mode of FIG. 11, the first SAR satellite again transmits a SAR signal according to the first polarization (H), and the cycle repeats. In an example, the PRF in dual-pol mode is half of the PRF in quad-pol mode, meaning that the length of the total transmit and receive cycle in dual-pol mode can be the same as two pulses in quad-pol mode, because there is no need to transmit and receive a second pulse in the opposite polarization. For example, in FIG. 12, the transmit time can still be approximately 10 micro-seconds, but the receive time can be approximately twice that of the receive time for each polarization in quad-pol mode (e.g., 180 ms). As a result, the swath width that can be covered in the dual-pol mode example can be approximately twice as wide as the swath width for the quad-pol mode example. As such, dual-pol mode can be used to trade off some polarization information (e.g., only half of the complex quad-polarization scattering matrix is obtained) for a higher swath width.

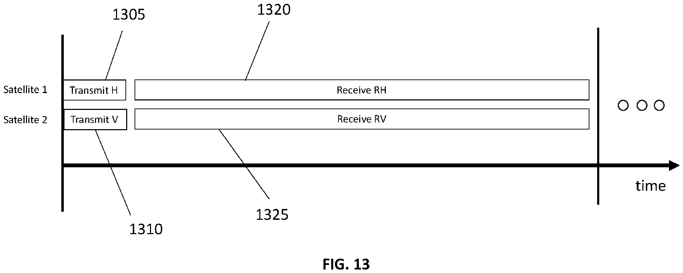

Turning now to FIG. 13, there is shown a timing diagram of an example of transmitting circularly-polarized SAR data and recording multi-polar return data in a mode known as compact-pol mode, according to an embodiment of the disclosure.

At block 1305, a first SAR signal according to a first polarization (H) is transmitted from a first SAR satellite.

At block 1310, a second SAR signal according to a second polarization (V) is simultaneously transmitted from a second SAR satellite, in such as a manner as to combine with the SAR signal from the first satellite to form a circularly-polarized beam. This is achieved by transmitting the H and V polarizations simultaneously and out of phase by 90 degrees. The circularly-polarized beam can be either right-hand or left-hand circularly polarized depending on the direction of the 90-degree phase shift between the transmissions.

At block 1320, the first SAR satellite records an RH-polarized return signal, meaning that it receives the H-polarized backscatters of the right-hand circularly-polarized SAR signal.

At block 1325, the second SAR satellite records an RV-polarized return signal, meaning that it receives the H-polarized backscatters of the right-hand circularly-polarized SAR signal.

After this, the cycle repeats. Compact-pol mode has the advantage of providing wider swaths than quad-pol while retaining some of the information advantages of quad-pol, and in particular supporting a variety of polarimetric classifications. In addition, unlike conventional dual-pol, compact-pol provides balanced signal strength in each channel, thus providing an overall signal-to-noise ratio advantage.

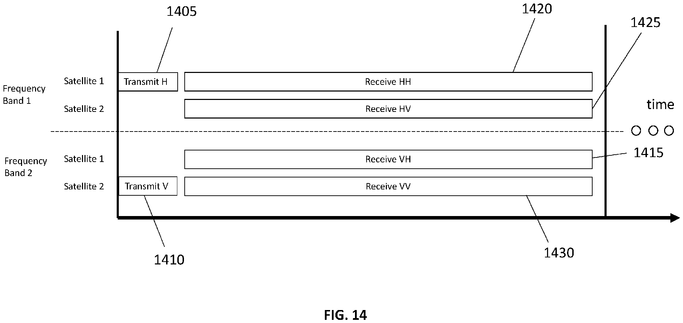

FIG. 14 shows another example of transmitting H and V polarized SAR signals simultaneously, but in separate non-overlapping frequency bands, according to another embodiment of the disclosure.

At block 1405, a first SAR signal according to a first polarization (H) is transmitted from a first SAR satellite in a first frequency band.

At block 1420, the first SAR satellite records an HH-polarized return signal in the first frequency band.

At block 1425, a second SAR satellite records an HV-polarized return signal in the first frequency band.

At block 1410, a second SAR signal according to a second polarization (V) is transmitted from the second SAR satellite in a second frequency band non-overlapping in frequency with the first frequency band, and simultaneously to the transmission of the H-polarized SAR signal (1405) in the first frequency band from the first satellite.

At block 1415, the first SAR satellite records a VH-polarized return signal in the second frequency band, simultaneously to recording the HH-polarized return signal in the first frequency band (block 1420).

At block 1430, the second SAR satellite records a VV-polarized return signal in the second frequency band, simultaneously to recording the HV-polarized return signal in the first frequency band (block 1425).

In an example, two X-band SAR satellites may operate with a centre frequency of 9.8 GHz and a bandwidth of 600 Mhz. As such, they will operate in a frequency band from 9.5 GHz to 10.1 GHz. This can be split into two separate non-overlapping frequency bands, with frequency band 1 being from 9.5 GHz to 9.8 GHz, and with frequency band 2 being from 9.8 GHz to 10.1 GHz. These two frequency bands, each with a bandwidth of 300 MHz, can then be used as described above.

The mode shown in FIG. 14 is known as quasi-quad-pol mod and can be thought of as two separate dual-pol modes operating simultaneously, for example an HH/HV mode in the upper part of the transmit frequency band (e.g., 9.8 GHz to 10.1 GHz), and a VH/VV mode in the lower part of the transmit frequency band (e.g., 9.5 GHz to 9.8 GHz). The two dual-pol modes do not interfere with each other because they are in different frequency bands that do not overlap, and the SAR radars of the two satellites do not have to pulse at twice the frequency as in dual-pol mode in order to alternate between transmitting in H and V polarizations. The SAR data obtained in a given frequency band has no phase relationship to the SAR data obtained in the other frequency band, and as such the two sets of SAR data are mutually incoherent, but the amplitude data can be obtained for the full quad-polarization scattering matrix. In this example, the SAR satellites are operating in the X-band frequency range (8 - 12 GHz), but the SAR radars could operate in other frequency bands, such as the C-band or the L-band.

A number of modes of operation, such as quad-pol mode, dual-pole mod, compact-pol mode, and quasi-quad-pol mode, for obtaining multi-polarized SAR data using two or more satellites have been described by way of example. However, the disclosure is not limited to only these modes. Other modes of operation for obtaining multi-polarized synthetic aperture radar data by using two or more satellites may also be possible.

Similarly, while the disclosure has been presented in the context of using a pair of SAR satellites to record multi-polarized SAR data, the disclosure also extends to other forms of SAR platforms, such as high-altitude aircraft (e.g., HAPS - high-altitude platform stations) employing SAR payloads.

The word "a" or "an" when used in conjunction with the term "comprising" or "including" in the claims and/or the specification may mean "one", but it is also consistent with the meaning of "one or more", "at least one", and "one or more than one" unless the content clearly dictates otherwise. Similarly, the word "another" may mean at least a second or more unless the content clearly dictates otherwise.

The terms "coupled", "coupling" or "connected" as used herein can have several different meanings depending on the context in which these terms are used. For example, as used herein, the terms coupled, coupling, or connected can indicate that two elements or devices are directly connected to one another or connected to one another through one or more intermediate elements or devices via a mechanical element depending on the particular context. The term "and/or" herein when used in association with a list of items means any one or more of the items comprising that list.

As used herein, a reference to "about" or "approximately" a number or to being "substantially" equal to a number means being within +/- 10% of that number.

Use of language such as "at least one of X, Y, and Z," "at least one of X, Y, or Z," "at least one or more of X, Y, and Z," "at least one or more of X, Y, and/or Z," or "at least one of X, Y, and/or Z," is intended to be inclusive of both a single item (e.g., just X, or just Y, or just Z) and multiple items (e.g., {X and Y}, {X and Z}, {Y and Z}, or {X, Y, and Z}). The phrase "at least one of" and similar phrases are not intended to convey a requirement that each possible item must be present, although each possible item may be present.

While the disclosure has been described in connection with specific embodiments, it is to be understood that the disclosure is not limited to these embodiments, and that alterations, modifications, and variations of these embodiments may be carried out by the skilled person without departing from the scope of the disclosure.

It is furthermore contemplated that any part of any aspect or embodiment discussed in this specification can be implemented or combined with any part of any other aspect or embodiment discussed in this specification.

**Claims**

1. A method of using two or more synthetic aperture radar (SAR) platforms, including a first SAR platform and a second SAR platform, to record multi-polarized SAR data, comprising:

   transmitting, by one of the SAR platforms, a first SAR signal having a first polarization;
   recording, by a first one of the SAR platforms, a first SAR return signal having the first polarization, wherein the first SAR return signal comprises backscattered energy from the first SAR signal; and
   recording, by a second one of the SAR platforms, a second SAR return signal having a second polarization, wherein the second SAR return signal comprises backscattered energy from the first SAR signal.

2. The method of claim 1, wherein the first SAR signal is transmitted from the first or the second SAR platform.

3. The method of claim 1 or 2, wherein each of the first and second SAR platforms comprises a single-polarized SAR antenna configured to transmit and receive SAR signals having only a single polarization.

4. The method of claim 1, further comprising:

   transmitting, by one of the SAR platforms, a second SAR signal having the second polarization;
   recording, by one of the SAR platforms, a third SAR return signal having the first polarization, wherein the third SAR return signal comprises backscattered energy from the second SAR signal; and
   recording, by one of the SAR platforms, a fourth SAR return signal having the second polarization, wherein the fourth SAR return signal comprises backscattered energy from the second SAR signal.

5. The method of claim 4, wherein the first SAR signal is transmitted from the first SAR platform, the second SAR signal is transmitted from the second SAR platform, the first and third SAR return signals are recorded at the first SAR platform, and the second and fourth SAR return signals are recorded at the second SAR platform.

6. The method of claim 5, wherein the first and second SAR platforms comprise a respective single-polarized SAR antenna configured to transmit and receive SAR signals having only a respective single polarization.

7. The method of claim 1, wherein the first or second SAR return signal is recorded in the form $S_{ii}$, $S_{ij}$, $S_{ji}$, or $S_{jj}$, wherein S is a real number comprising amplitude data, i indicates the first polarization, and j indicates the second polarization.

8. The method of claim 4, wherein the first, second, third, or fourth SAR return signal is recorded in the form $S_{ii}$, $S_{ij}$, $S_{ji}$, or $S_{jj}$, wherein S is a complex number comprising amplitude data and phase data, i indicates the first polarization, and j indicates the second polarization.

9. The method of any one of claims 1-8, wherein:

   transmitting the first SAR signal comprises transmitting the first SAR signal using a SAR antenna oriented at a first squint angle relative to the target location; and
   transmitting the second SAR signal comprises transmitting the second SAR signal using a SAR antenna oriented at a second squint angle relative to the target location.

10. The method of any one of claims 1-9, wherein:

   the first SAR platform is a SAR satellite orbiting the Earth along a first orbital path;
   the second SAR platform is a SAR satellite orbiting the Earth along a second orbital path and is spaced from the first SAR platform by a baseline distance; and

the baseline distance comprises an along-track component and an across-track component, wherein:

the first and second SAR signals have different azimuth beamwidths, and the along-track component is less than the smaller azimuth beamwidth; or
the first and second SAR signals have the same azimuth beamwidth, and the along-track component is less than the azimuth beamwidth.

11. The method of any one of claims 1-10, wherein:

the first and second SAR platforms are SAR satellites orbiting the Earth; and
the SAR satellites are separated by a perpendicular baseline that is less than a critical baseline.

12. The method of any one of claims 1-11, wherein:

transmitting the first SAR signal comprises repeatedly transmitting the first SAR signal according to a pulse repetition frequency (PRF); and
transmitting the second SAR signal comprises repeatedly transmitting the second SAR signal according to the pulse repetition frequency and offset from the repeated transmissions of the first SAR signal by 1 / (2 * PRF).

13. The method of any one of claims 1-12, wherein the first and second SAR platforms are SAR satellites.

14. The method of claim 4, wherein the first SAR signal is transmitted simultaneously to the second SAR signal, and wherein the first polarization is 90 degrees out of phase with the second polarization.

15. The method of claim 4, wherein:

the first SAR signal is transmitted in a first frequency band; and
the second SAR signal is transmitted in a second frequency band that is non-overlapping with the first frequency band.

16. A system for recording multi-polarized synthetic aperture radar (SAR) data, comprising:

a first SAR platform and a second SAR platform; and
one or more computer-readable media storing computer program code configured, when executed by one or more processors, to cause the one or more processors to:

transmit, by one of the first and second SAR platforms, a first SAR signal having a first polarization;
record, by a first one of the first and second SAR platforms, a first SAR return signal having the first polarization, wherein the first SAR return signal comprises backscattered energy from the first SAR signal; and
record, by a second one of the first and second SAR platforms, a second SAR return signal having a second polarization, wherein the second SAR return signal comprises backscattered energy from the first SAR signal.

**FIG. 1**

**FIG. 2**

**FIG. 3**

**FIG. 4**
**Prior Art**

**FIG. 5**

**FIG. 6**

**FIG. 7**

86

87

80

89

88    85

**FIG. 8**

**FIG. 9**

**FIG. 10**

FIG. 11

FIG. 12

FIG. 13

FIG. 14

Europäisches
Patentamt

European
Patent Office

Office européen
des brevets

# EUROPEAN SEARCH REPORT

**Application Number**

EP 24 27 5017

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BUESO-BELLO JOSE-LUIS ET AL: "Performance Evaluation of the TanDEM-X Quad Polarization Acquisitions in the Science Phase", EUSAR 2016: PROCEEDINGS OF THE 11TH EUROPEAN CONFERENCE ON SYNTHETIC APERTURE RADAR, [Online] 6 June 2016 (2016-06-06), pages 1-6, XP093196977, ISBN: 978-3-8007-4228-8 Retrieved from the Internet: URL:https://ieeexplore.ieee.org/stampPDF/g etPDF.jsp?tp=&arnumber=7559379&ref=aHR0cHM 6Ly9pZWVleHBsb3JlLmllZWUub3JnL2RvY3VtZW50L zc1NTkzNzk=> [retrieved on 2024-08-20] | 1-4,7,8, 10-14,16 | INV. G01S13/90 G01S7/02 G01S13/00 ADD. G01S13/10 |
| Y | * abstract; figure 7 * * page 627, left-hand column, lines 1-7 * * page 629, left-hand column, lines 33-55 * * page 631, left-hand column, lines 5-30 * ----- | 5,6,9,15 | |
| X | Fritz T. ET AL: "TanDEM-X Experimental Product Description", TanDEM-X Science Server, 27 July 2012 (2012-07-27), pages 1-192, XP093196990, Retrieved from the Internet: URL:https://tandemx-science.dlr.de/pdfs/TD -GS-PS-3028_TanDEM-X-Experimental-Product- Description_1.2.pdf [retrieved on 2024-08-20] | 1-14,16 | **TECHNICAL FIELDS SEARCHED (IPC)** G01S |
| Y | * page 8, lines 24-27 * * page 9, lines 11-12 * * page 11, lines 6-7 * * page 18, line 1 - page 19, line 10 * ----- -/-- | 5,6,9,15 | |

The present search report has been drawn up for all claims

| Place of search | Date of completion of the search | Examiner |
|---|---|---|
| Munich | 21 August 2024 | Rodríguez González |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

**Application Number**

EP 24 27 5017

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Hajnsek Irena ET AL: "Announcement of Opportunity: TanDEM-X Science Phase", TanDEM-X Ground Segment, 19 May 2014 (2014-05-19), pages 1-27, XP093197073, Retrieved from the Internet: URL:https://tandemx-science.dlr.de/pdfs/TD -PD-PL_0032TanDEM-X_Science_Phase.pdf [retrieved on 2024-08-21] * figures 4.1, 4.8 * * page 10 * * page 19 - page 20 * ----- | 1-16 | |
| A | LI PENG ET AL: "First Demonstration of Hybrid Quad-Pol SAR Based on P-Band Airborne Experiment", IEEE TRANSACTIONS ON GEOSCIENCE AND REMOTE SENSING, IEEE, USA, vol. 60, 15 June 2021 (2021-06-15), pages 1-16, XP011897043, ISSN: 0196-2892, DOI: 10.1109/TGRS.2021.3084959 [retrieved on 2022-01-12] * figure 1 * * page 1, right-hand column, line 12 - page 2, left-hand column, line 2 * * page 15, left-hand column, lines 11-12 * ----- | 1-16 | TECHNICAL FIELDS SEARCHED (IPC) |

-/--

The present search report has been drawn up for all claims

| Place of search | Date of completion of the search | Examiner |
|---|---|---|
| Munich | 21 August 2024 | Rodríguez González |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

Europäisches
Patentamt

European
Patent Office

Office européen
des brevets

# EUROPEAN SEARCH REPORT

**Application Number**

EP 24 27 5017

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZHANG YONGWEI ET AL: "Ambiguity Suppression of Cross-Pol Signals by DPCA With DBF Reflector for Hybrid/ [pi]/4 Quad-Pol SAR", IEEE TRANSACTIONS ON GEOSCIENCE AND REMOTE SENSING, IEEE, USA, vol. 60, 24 February 2021 (2021-02-24), pages 1-13, XP011892349, ISSN: 0196-2892, DOI: 10.1109/TGRS.2021.3053329 [retrieved on 2021-12-03] * figure 1 * * page 1, right-hand column, lines 5-27 * ----- | 1-16 | |
| Y | CN 115 184 931 A (CHINA ACADEMY SPACE TECHNOLOGY ET AL.) 14 October 2022 (2022-10-14) | 15 | |
| A | * the whole document * ----- | 1-14,16 | |
| | | | TECHNICAL FIELDS SEARCHED (IPC) |

The present search report has been drawn up for all claims

| Place of search | Date of completion of the search | Examiner |
|---|---|---|
| Munich | 21 August 2024 | Rodríguez González |

EPO FORM 1503 03.82 (P04C01)

page 3 of 3

## ANNEX TO THE EUROPEAN SEARCH REPORT
## ON EUROPEAN PATENT APPLICATION NO.

EP 24 27 5017

This annex lists the patent family members relating to the patent documents cited in the above-mentioned European search report.
The members are as contained in the European Patent Office EDP file on
The European Patent Office is in no way liable for these particulars which are merely given for the purpose of information.

21-08-2024

| Patent document cited in search report | Publication date | Patent family member(s) | Publication date |
|---|---|---|---|
| CN 115184931 A | 14-10-2022 | NONE | |

For more details about this annex : see Official Journal of the European Patent Office, No. 12/82

EPO FORM P0459